# EUROPÄISCHE PATENTANMELDUNG

(11) **EP 1 593 992 A1**
(43) Veröffentlichungstag der Anmeldung: **09.11.2005**
(21) Anmeldenummer: 04022055.0
(22) Anmeldetag: 16.09.2004
(51) Int. Cl.: G02B 6/42, G02B 6/26

(54) **Optisches Faserverbindungssystem**

(30) Priorität: 07.05.2004 GB 0410174
(71) Anmelder: Delphi Technologies, Inc., Troy, MI 48007 (US)
(72) Erfinder: Mihm, Achim, 42389 Wuppertal (DE); Herlitz, Martin, 42897 Remscheid (DE); Rucks, Michael, 58239 Schwerte (DE)
(74) Vertreter: Manitz, Finsterwald & Partner GbR

(57) **Zusammenfassung**

Die Erfindung betrifft ein Faserverbindungssystem zur Ankoppelung einer optischen Faser, mit einem Zwischenelement mit einer ersten Ankoppelungseinrichtung an einer ersten Seite für eine optische Faser, einer zweiten Ankoppelungseinrichtung an einer zweiten Seite für einen elektrooptischen Wandler oder eine zweite optische Faser und einem Verbindungskanal zwischen der ersten und der zweiten Ankoppelungseinrichtung. Das Faserverbindungssystem weist einen Lichtleitstab auf, der in den Verbindungskanal einsetzbar oder eingesetzt ist und eine Vielzahl von parallel angeordneten Lichtleitfasern umfasst, die sich von der ersten zur zweiten Ankoppelungseinrichtung erstrecken, und der einen größeren Querschnitt als der lichtemittierende Kern der optischen Faser hat.

## Beschreibung

Die Erfindung betrifft ein Faserverbindungssystem zur Ankoppelung einer optischen Faser an einen elektrooptischen Wandler oder eine zweite optische Faser und einen Lichtleitstab, der insbesondere für das Faserverbindungssystem einsetzbar ist.

Während zum Beispiel die Datenverarbeitung auf elektronischem Wege geschieht, werden zur Datenübertragung heutzutage aufgrund ihrer Fähigkeit große Datenmengen optisch zu übertragen, häufig optische Lichtleiter bzw. optische Fasern eingesetzt. Zur dazu notwendigen Umwandlung eines elektrischen Signals in ein optisches Signal werden Leuchtdioden oder Laserdioden, zum Beispiel VCSEL (Vertical Cavity Surface Emitting Laser) eingesetzt. Die von diesen Elementen erzeugten Lichtsignale müssen zur Datenübertragung in die optische Faser eingekoppelt werden. Andererseits müssen optische Signale, die durch eine optische Faser übertragen werden, zur Weiterverarbeitung in ein lichtempfindliches elektronisches Element, zum Beispiel eine Photodiode eingekoppelt werden.

Sowohl zur Einkopplung des optischen Signals in die optische Faser als auch zur Auskoppelung kann ein optischer Verbinder zur Verbindung der optischen Faser mit einem elektrooptischen Wandler vorgesehen sein.

Dazu kann die optische Faser an einem Ende eine Verbindungsmuffe aufweisen, die in den Verbinder eingesteckt werden kann. Am gegenüberliegenden Ende des Verbinders wird ein elektrooptischer Wandler angeschlossen. Aus Raumgründen ist es dabei nicht immer möglich, das Ende der optischen Faser in direkten physikalischen Kontakt mit dem elektrooptischen Wandler zu bringen, weshalb zwischen der Faser und dem Wandler eine Lücke überbrückt werden muss. Bei bekannten Lösungen werden dazu kurze Lichtleitfaserstücke verwendet, die zwischen die eigentliche Faser und den elektrooptischen Wandler gesetzt werden. Speziell bei optischen Fasern mit sehr kleinen Kerndurchmessern von zum Beispiel 230 µm muss das so gebildete Zwischenstück allerdings sehr genau positioniert werden, um die optischen Verluste gering zu halten. Sowohl die Herstellung als auch die Positionierung des derart kleinen Zwischenstückes erfordert daher großen Aufwand.

Andere Lösungen verwenden eine Linse vor dem elektrooptischen Wandler zur Überbrückung der Lücke. Dabei werden aber an die Positioniergenauigkeit noch höhere Anforderungen gestellt.

Aufgabe der vorliegenden Erfindung ist es ein Faserverbindungssystem zur Ankoppelung einer optischen Faser anzugeben, bei der die Anwendung einfacher ist und dennoch eine möglichst verlustarme Überbrückung der Lücke zwischen optischer Faser und einem elektrooptischen Wandler oder einer zweiten optischen Faser möglich ist.

Diese Aufgabe wird mit einem Faserverbindungssystem zur Ankoppelung einer optischen Faser mit den Merkmalen der unabhängigen Ansprüche gelöst. Bevorzugte Ausführungsformen sind Gegenstand von Unteransprüchen. Vorteilhafte Verwendungen des erfindungsgemäßen Systems oder des erfindungsgemäßen Lichtleitstabes sind Gegenstand der Ansprüche 8 bis 10.

Insbesondere weist das erfindungsgemäße Faserverbindungssystem ein Zwischenelement mit einer ersten und einer zweiten Ankoppelungseinrichtung auf. Die erste Ankoppelungseinrichtung dient zur Ankoppelung einer optischen Faser, während die zweite Ankoppelungseinrichtung zur Ankoppelung eines elektrooptischen Wandlers oder einer zweiten optischen Faser dient. Zwischen der ersten und der zweiten Ankoppelungseinrichtung ist ein Verbindungskanal vorgesehen. Das erfindungsgemäße Faserverbindungssystem weist einen Lichtleitstab auf, der in dem Verbindungskanal einsetzbar ist oder in diesen eingesetzt ist. Der Lichtleitstab weist eine Vielzahl von parallel angeordneten Lichtleitfasern auf, die sich bei in dem Verbindungskanal eingesetztem Lichtleitstab von der ersten zur zweiten Ankoppelungseinrichtung erstrecken. Der Lichtleitstab weist einen größeren Querschnitt als der lichtemittierende Kern der optischen Faser auf.

Das optische Signal wird mit dem erfindungsgemäßen Faserverbindungssystem zwischen der ersten und der zweiten Ankoppelungseinrichtung durch eine Anzahl von Lichtleitfasern in dem Lichtleitstab übermittelt. Eine mit Bezug zur Lichtausbreitungsrichtung laterale Verschiebung des Lichtleitstabes bewirkt nur, dass eine andere Lichtleitfaser oder eine andere Untergruppe von Lichtleitfasern des Lichtleitstabes die Übermittlung des Signals übernimmt. Die Anforderungen an die Positionierung des Lichtleitstabes sind daher gering.

Der Lichtleitstab weist einen die Vielzahl der Lichtleitfasern umgebenden Mantel auf, der das Lichtleitfaserbündel vor Verletzungen schützen kann.

Das erfindungsgemäße Faserverbindungssystem kann derart ausgestaltet sein, dass eine optische Faser in die erste Ankoppelungseinrichtung direkt eingesteckt werden kann. Besonders vorteilhaft ist jedoch eine Ausgestaltung, bei der die erste Ankoppelungseinrichtung eine passgenaue Aufnahme für eine optische Verbindungsmuffe einer optischen Faser umfasst. Eine derartige Ausgestaltung ermöglicht ein einfaches und sicheres Einsetzen der optischen Faser.

Bei einer vorteilhaften Ausführungsform des erfindungsgemäßen Faserverbindungssystems ist das Zwischenelement als Gehäuse ausgestaltet, das zusätzlichen Schutz für die miteinander verkoppelnden Elemente und den Lichtleitstab bietet.

Sowohl der Verbindungskanal als auch der Lichtleitstab können unterschiedliche Querschnitte aufweisen. Besonders einfach zusammenzusetzen ist jedoch ein erfindungsgemäßes Faserverbindungssystem, bei dem der Verbindungskanal und/oder der Lichtleitstab zylindrisch ist, da beim Zusammensetzen nicht auf die Winkelausrichtung geachtet werden muss.

Um das Einsetzen des Lichtleitstabes in das Zwischenelement des Faserverbindungssystems zu erleichtern und präzise zu gestalten, weist der Außenmantel des Lichtleitstabs bei einer Weiterbildung des erfindungsgemäßen Faserverbindungssystems auf einer Seite einen seitlich nach außen weisenden Kragen aufweisen, der beim Einsetzen des Lichtleitstabes in den Verbindungskanal wie ein Anschlag wirkt.

Gesonderter Schutz wird für einen Lichtleitstab beansprucht, der eine Vielzahl von in einem Bündel parallel angeordneten Lichtleitfasern aufweist und insbesondere vorteilhaft in einem erfindungsgemäßen Faserverbindungssystem eingesetzt werden kann.

Besonders vorteilhaft lässt sich das erfindungsgemäße Faserverbindungssystem oder der erfindungsgemäße Lichtleitstab zur Ankoppelung einer optischen Faser an eine Leuchtdiode oder eine Laserdiode, insbesondere einen VCSEL (Vertical Cavity Surface Emitting Laser), zur Verbindung einer optischen Faser mit einem lichtsensitiven Element, insbesondere einer Photodiode, oder zur Verbindung einer ersten optischen Faser mit einer zweiten optischen Faser einsetzen.

Im Folgenden wird eine Ausführungsform des erfindungsgemäßen Faserverbindungssystems anhand der anliegenden Figuren im Detail erläutert. Dabei zeigt:
- Fig. 1: ein erfindungsgemäßes Faserverbindungssystem vor dem Ankoppeln einer optischen Faser an ein VCSEL,
- Fig. 2: die Anordnung der Fig. 1 in verkoppeltem Zustand,
- Fig. 3: einen Längsschnitt durch einen erfindungsgemäßen Lichtleitstab,
- Fig. 4: eine Teildraufsicht auf einen erfindungsgemäßen Lichtleitstab in der in Fig. 3 mit IV bezeichneten Blickrichtung, und
- Fig. 5: einen erfindungsgemäßen Lichtleitstab in drei unterschiedlichen Einsatzbedingungen.

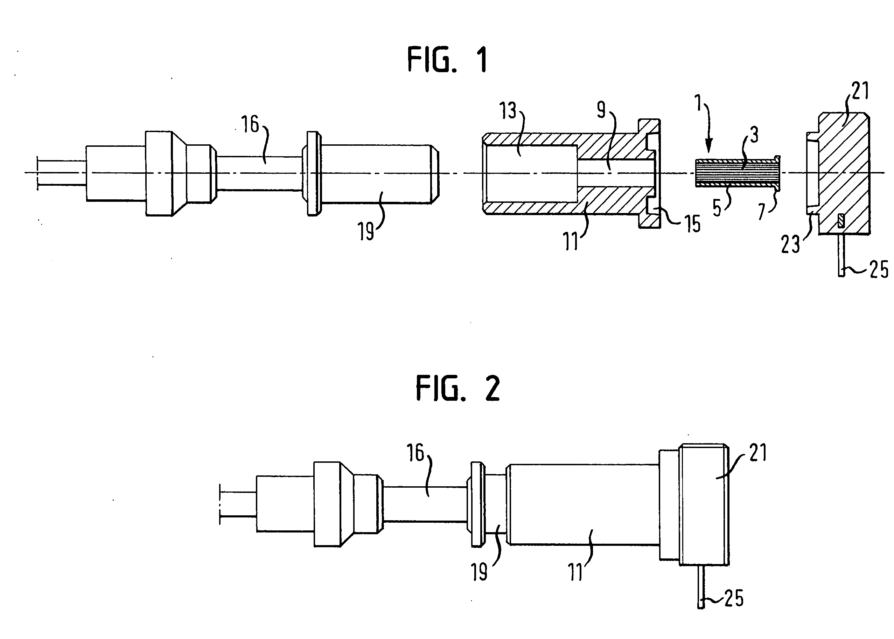

Fig. 1 zeigt einen erfindungsgemäßen Lichtleitstab 1, der in seinem Inneren parallel zueinander angeordnete Lichtleitfasern 3 kleinen Durchmessers umfasst. Der Durchmesser der einzelnen Lichtleitfasern kann zum Beispiel bis zu etwa 20 µm klein sein. Das Bündel der Lichtleitfasern 3 ist von einem Außenmantel 5 umgeben, der an seinem einen stirnseitigen Ende einen Kragen 7 aufweist. Der gesamte Lichtleitstab hat zum Beispiel einen Außendurchmesser von etwa 1 mm und eine Länge von etwa 5 mm. Es können zum Beispiel etwa 1000 Lichtleitfasern 3, zum Beispiel Glasfasern, in einem Lichtleitstab 1 vorgesehen sein.

Das Gehäuse 11 weist einen Verbindungskanal 9 auf, der in seinen Innenmaßen an die Außenmaße des Lichtleitstabes 1 angepasst ist. Bei in der Anordnung der Fig. 1 von rechts in den Verbindungskanal 9 eingeschobenem Lichtleitstab 1 schlägt der Kragen 7 an die Stirnfläche des Gehäuses 11 an, ohne über die Vorderkante des Gehäuses 11 überzustehen.

Auf der gegenüberliegenden Seite des Gehäuses 11 ist eine Aufnahme 13 vorgesehen, um eine Verbindungsmuffe 19 aufzunehmen, die an einer optischen Faser 16 befestigt ist.

Auf der der Aufnahme 13 gegenüberliegenden Seite des Gehäuses 11 ist eine Ausnehmung 15 vorgesehen, die bei dieser Ausführungsform zur Ankoppelung eines VCSEL (Vertical Cavity Surface Emitting Laser) 21 dient. Die Ausnehmung 15 ist dabei zur Aufnahme entsprechender Halterungselemente, zum Beispiel des hier dargestellten Kragens 23 angepasst. 25 bezeichnet den elektrischen Anschluss des VCSEL 21.

Zum Einsatz des erfindungsgemäßen Systems wird der Lichtleitstab 1 in den Verbindungskanal 9 eingeschoben, bis der Kragen 7 an der in Fig. 1 rechten Seite des Gehäuses 11 anschlägt. Das Gehäuse 11 wird anschließend auf den VCSEL 21 aufgesteckt, woraufhin die Verbindungsmuffe 19 der optischen Faser 16 in die Aufnahme 13 eingeführt werden kann. Hierdurch entsteht die verkoppelte Anordnung, die in Fig. 2 gezeigt ist.

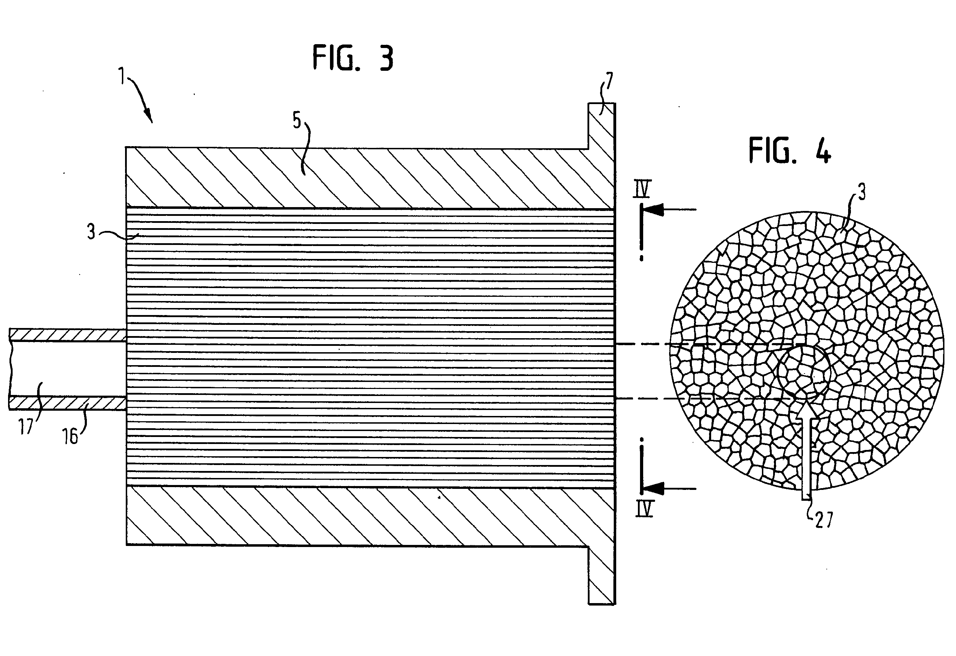

Fig. 3 zeigt einen Längsschnitt durch einen erfindungsgemäßen Lichtleitstab 1 im Detail. Insbesondere ist erkennbar, dass die einzelnen Lichtleitfasern 3 des von dem Außenmantel 5 umgebenen Lichtleitfaserbündels jeweils einen kleineren Durchmesser haben als ein Kern 17 der optischen Faser 16, die in Fig. 3 auf der linken Seite nur schematisch angedeutet ist.

Fig. 4 zeigt eine Draufsicht auf das Lichtleitfaserbündel, das in Fig. 3 im Längsschnitt sichtbar ist. 27 deutet dabei schematisch einen kreisförmigen Bereich an, der von dem VCSEL 21 beleuchtet wird. Die beleuchtete Fläche 27 umfasst dabei die Querschnitte mehrerer Lichtleitfasern 3. Strichliniert ist angedeutet, dass der in Fig. 3 dargestellte Kern 17 optischen Faser 16 dem von dem VCSEL 21 beleuchteten Bereich 27 gegenüber angeordnet ist. Im gezeigten Beispiel tragen bei einem typischen Durchmesser des Ausgangslichtsignals eines VCSEL 21 von 20 bis 50µm etwa fünf Lichtleitfasern 3 des Lichtleitstabes 1 zur Übermittlung bei.

Auch wenn der Lichtleitstab 1 etwas von dem lichtemittierenden VCSEL entfernt ist, beispielsweise im Abstand von etwa 1 mm, kann der Durchmesser des Ausgangslichtes auf etwa 0,5 mm aufgeweitet sein. In diesem Fall ist der Lichtleitstab 1 besonders vorteilhaft, da er eine weitere Strahlaufweitung verhindert.

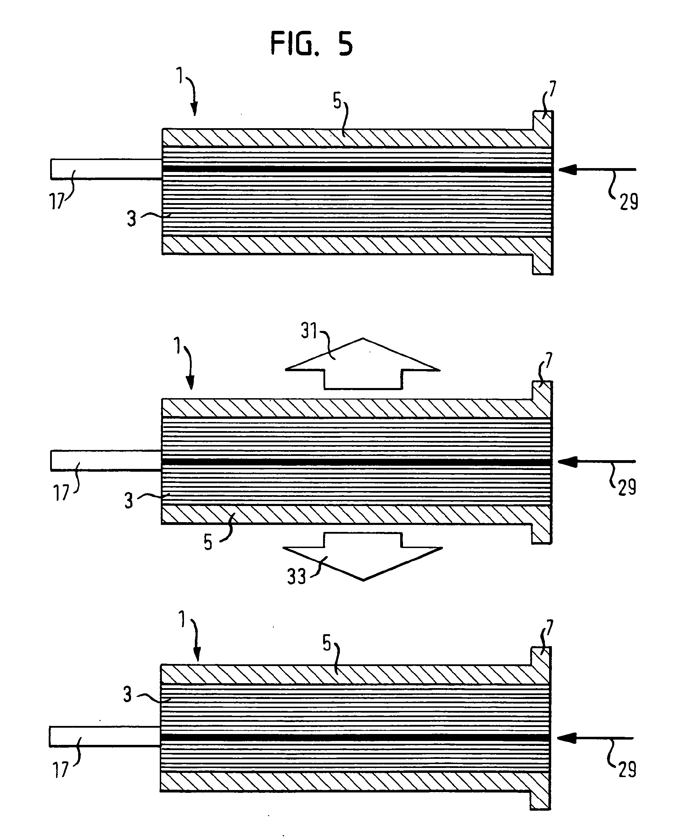

Fig. 5 zeigt drei unterschiedliche Einsatzbedingungen des Lichtleitstabes 1. Das von dem VCSEL 21 in den Lichtleitstab direkt eingekoppelte Licht ist schematisch als Pfeil 29 dargestellt. In der mittleren Darstellung der Fig. 5 ist der Lichtleitstab 1 bezüglich des Kerns 17 der optischen Faser und dem einfallenden Licht 29 zentral ausgerichtet. In der oberen Darstellung ist der Lichtpfad in Pfeilrichtung 31 gegenüber dem Zentrum versetzt. In der unteren Darstellung ist der Lichtpfad in Richtung des Pfeils 33 gegenüber dem Zentrum des Lichtleitstabes 1 versetzt.

Es wird deutlich, dass eine laterale Verschiebung des Lichtleitstabes 1 bzw. des Bündels aus Lichtleitfasern 3 gegenüber der Lichtausbreitungsrichtung bei dem erfindungsgemäßen Faserverbindungssystem unkritisch ist. Die Übertragungsgenauigkeit bzw. die Übertragungsverluste hängen ausschließlich von der gegenseitigen Ausrichtung der Lichtquelle 21 und der optischen Faser 17 ab, ohne dass die präzise Ausrichtung des Lichtleitstabes 1 eine Rolle spielen würde.

Das beschriebene Ausführungsbeispiel ist auf ein System zur Einkoppelung eines optischen Signals eines VCSEL 21 in eine optische Faser 17 gerichtet. Analog kann ein erfindungsgemäßes Faserverbindungssystem auch eingesetzt werden um eine optische Faser 17 an andere lichtemittierende Elemente, zum Beispiel andere Ausgestaltungen von Laserdioden oder Leuchtdioden anzukoppeln. Ebenso kann das erfindungsgemäße Faserverbindungssystem zur Ankoppelung einer optischen Faser an ein lichtsensitives Element, wie zum Beispiel eine Photodiode anstelle des lichtemittierenden Elementes 21 verwendet werden. Ein solches System wird zur Umwandlung von optischen Signalen in elektrische Signale verwendet. Schließlich kann das erfindungsgemäße Faserverbindungssystem bei entsprechender Ausgestaltung des Gehäuses 11 auch zur Verbindung von zwei optischen Fasern miteinander eingesetzt werden.

### Bezugszeichenliste

- 1: Lichtleitstab
- 3: Lichtleitfaser
- 5: Außenmantel
- 7: Kragen
- 9: Verbindungskanal
- 11: Gehäuse
- 13: Aufnahme für Faserverbindungsmuffe
- 15: Ausnehmung
- 16: optische Faser
- 17: Kern der optischen Faser
- 19: Verbindungsmuffe
- 21: Laserdiode
- 23: Kragen
- 25: elektrischer Anschluss
- 27: von der Laserdiode beleuchtete Fläche
- 29: Einstrahlrichtung
- 31, 33: laterale Verschiebung des Lichtpfades

## Patentansprüche

1. Faserverbindungssystem zur Ankoppelung einer optischen Faser, das folgendes umfasst:
- ein Zwischenelement (11) mit einer ersten Ankoppelungseinrichtung (13) an einer ersten Seite für eine optische Faser, einer zweiten Ankoppelungseinrichtung (15) an einer zweiten Seite für einen elektrooptischen Wandler (21) oder eine zweite optische Faser und einem Verbindungskanal (9) zwischen der ersten und der zweiten Ankoppelungseinrichtung, und
- einem in den Verbindungskanal einsetzbaren oder eingesetzten Lichtleitstab (1), der eine Vielzahl von parallel angeordneten Lichtleitfasern (3) umfasst, die sich bei in den Verbindungskanal (9) eingesetztem Lichtleitstab (1) von der ersten zur zweiten Ankoppelungseinrichtung erstrecken, und der einen größeren Querschnitt als der Licht emittierende Kern (17) der optischen Faser (16) hat.

2. Faserverbindungssystem nach Anspruch 1,
**dadurch gekennzeichnet,**
**dass** der Querschnitt aller Lichtleitfasern (3) des Lichtleitstabes (1) etwa 2 bis 5 mal so groß wie der Querschnitt des Kernes (17) der optischen Faser (16) ist.

3. Faserverbindungssystem zur Ankoppelung einer optischen Faser nach einem der Ansprüche 1 oder 2, bei dem der Lichtleitstab (1) einen die Vielzahl der Lichtleitfasern (3) umgebenden Mantel (5) aufweist, der an einer Stirnfläche einen Kragen (7) mit größeren Außenmaßen als die Innenmaße des Verbindungskanals (9) aufweist.

4. Faserverbindungssystem zur Ankoppelung einer optischen Faser nach Anspruch 1 - 3, bei dem die erste Ankoppelungseinrichtung eine passgenaue Aufnahme (13) für eine optische Verbindungsmuffe (19) einer optischen Faser (16) umfasst.

5. Faserverbindungssystem zur Ankoppelung einer optischen Faser nach einem der vorstehenden Ansprüche, bei der die zweite Ankoppelungseinrichtung (15) zur Ankoppelung einer Leuchtdiode oder Laserdiode (21), insbesondere eines VCSEL ausgestaltet ist.

6. Faserverbindungssystem zur Ankoppelung einer optischen Faser nach einem der vorstehenden Ansprüche, bei dem der Verbindungskanal (9) zylindrisch ist.

7. Lichtleitstab, insbesondere für ein Faserverbindungssystem nach einem der Ansprüche 1 bis 6, mit einer Vielzahl von in einem Bündel parallel angeordneten Lichtleitfasern (3) und einem das Bündel paralleler Lichtleitfasern (3) umgebenden Außenmantel (5), wobei der Mantel (5) an einer Stirnfläche einen seitlich nach außen weisenden Kragen (7) aufweist.

8. Verwendung eines Faserverbindungssystems nach einem der Ansprüche 1 bis 6 oder eines Lichtleitstabes nach Anspruch 7 zur Verbindung einer optischen Faser (16) mit einer Leuchtdiode oder einer Laserdiode (21), insbesondere einem VCSEL.

9. Verwendung eines Faserverbindungssystems nach einem der Ansprüche 1 bis 6 oder eines Lichtleitstabes nach Anspruch 7 zur Verbindung einer optischen Faser mit einem lichtsensitiven Element, insbesondere einer Fotodiode.

10. Verwendung eines Faserverbindungssystems nach einem der Ansprüche 1 bis 6 oder eines Lichtleitstabes nach Anspruch 7 zur Verbindung einer ersten optischen Faser mit einer zweiten optischen Faser.

## Geänderte Patentansprüche

### Geänderte Patentansprüche gemäss Regel 86(2) EPÜ.

**1.** Faserverbindungssystem zur Ankoppelung einer optischen Faser, das folgendes umfasst:
- ein Zwischenelement (11) mit einer ersten Ankoppelungseinrichtung (13) an einer ersten Seite für eine optische Faser, einer zweiten Ankoppelungseinrichtung (15) an einer zweiten Seite für einen elektrooptischen Wandler (21) oder eine zweite optische Faser und einem Verbindungskanal (9) zwischen der ersten und der zweiten Ankoppelungseinrichtung, und
- einem in den Verbindungskanal einsetzbaren oder eingesetzten Lichtleitstab (1), der eine Vielzahl von parallel angeordneten Lichtleitfasern (3) umfasst, die sich bei in den Verbindungskanal (9) eingesetztem Lichtleitstab (1) von der ersten zur zweiten Ankoppelungseinrichtung erstrecken, wobei der Lichtleitstab (1) einen größeren Querschnitt als der Licht emittierende Kern (17) der optischen Faser (16) hat und einen die Vielzahl der Lichtleitfasern (3) umgebenden Mantel (5) aufweist.

**2.** Faserverbindungssystem nach Anspruch 1,
**dadurch gekennzeichnet,**
**dass** der Querschnitt aller Lichtleitfasern (3) des Lichtleitstabes (1) etwa 2 bis 5 mal so groß wie der Querschnitt des Kernes (17) der optischen Faser (16) ist.

**3.** Faserverbindungssystem zur Ankoppelung einer optischen Faser nach einem der Ansprüche 1 oder 2, bei dem der Mantel (5) des Lichtleitstabs (1) an einer Stirnfläche einen Kragen (7) mit größeren Außenmaßen als die Innenmaße des Verbindungskanals (9) aufweist.

**4.** Faserverbindungssystem zur Ankoppelung einer optischen Faser nach Anspruch 1 - 3, bei dem die erste Ankoppelungseinrichtung eine passgenaue Aufnahme (13) für eine optische Verbindungsmuffe (19) einer optischen Faser (16) umfasst.

**5.** Faserverbindungssystem zur Ankoppelung einer optischen Faser nach einem der vorstehenden Ansprüche, bei der die zweite Ankoppelungseinrichtung (15) zur Ankoppelung einer Leuchtdiode oder Laserdiode (21), insbesondere eines VCSEL ausgestaltet ist.

**6.** Faserverbindungssystem zur Ankoppelung einer optischen Faser nach einem der vorstehenden Ansprüche, bei dem der Verbindungskanal (9) zylindrisch ist.

**7.** Lichtleitstab, insbesondere für ein Faserverbindungssystem nach einem der Ansprüche 1 bis 6, mit einer Vielzahl von in einem Bündel parallel angeordneten Lichtleitfasern (3) und einem das Bündel paralleler Lichtleitfasern (3) umgebenden Außenmantel (5), wobei der Mantel (5) an einer Stirnfläche einen seitlich nach außen weisenden Kragen (7) aufweist.

**8.** Verwendung eines Faserverbindungssystems nach einem der Ansprüche 1 bis 6 oder eines Lichtleitstabes nach Anspruch 7 zur Verbindung einer optischen Faser (16) mit einer Leuchtdiode oder einer Laserdiode (21), insbesondere einem VCSEL.

**9.** Verwendung eines Faserverbindungssystems nach einem der Ansprüche 1 bis 6 oder eines Lichtleitstabes nach Anspruch 7 zur Verbindung einer optischen Faser mit einem lichtsensitiven Element, insbesondere einer Fotodiode.

**10.** Verwendung eines Faserverbindungssystems nach einem der Ansprüche 1 bis 6 oder eines Lichtleitstabes nach Anspruch 7 zur Verbindung einer ersten optischen Faser mit einer zweiten optischen Faser.
